Europäisches Patentamt

European Patent Office

Office européen des brevets

(11) Publication number: **0 571 626 A1**

## EUROPEAN PATENT APPLICATION
### published in accordance with Art. 158(3) EPC

(21) Application number: 91920785.2

(51) Int. Cl.⁵: **A23L 1/328**

(22) Date of filing: **16.10.91**

(86) International application number:
**PCT/SU91/00206**

(87) International publication number:
**WO 93/07764 (29.04.93 93/11)**

(43) Date of publication of application:
**01.12.93 Bulletin 93/48**

(84) Designated Contracting States:
**AT CH DE ES FR GB IT LI NL SE**

(71) Applicant: **VAINERMAN, Efim Semenovich**
**Proezd Karamzina, 9-337**
**Moscow, 117436(SU)**
Applicant: **BAKARI, Tamara Ivanovna**
**ul. Kosinskaya, 18-3-32**
**Moscow 111538(SU)**
Applicant: **MAMTSIS, Anatoly Moiseevich**
**1 Krasnoselsky per, 7/9-10**
**Moscow, 107140(SU)**
Applicant: **ROGOZHIN, Sergei Vasilievich**
**ul. Vavilova, 55/7-20**
**Moscow, 117312(SU)**

(72) Inventor: **VAINERMAN, Efim Semenovich**
**Proezd Karamzina, 9-337**
**Moscow, 117436(SU)**
Inventor: **BAKARI, Tamara Ivanovna**
**ul. Kosinskaya, 18-3-32**
**Moscow 111538(SU)**
Inventor: **MAMTSIS, Anatoly Moiseevich**
**1 Krasnoselsky per, 7/9-10**
**Moscow, 107140(SU)**
Inventor: **ROGOZHIN, Sergei Vasilievich**
**ul. Vavilova, 55/7-20**
**Moscow, 117312(SU)**

(74) Representative: **Hansen, Bernd, Dr.**
**Dipl.-Chem. et al**
**Hoffmann, Eitle & Partner**
**Patent- und Rechtsanwälte,**
**Postfach 81 04 20**
**D-81904 München (DE)**

(54) **CAVIAR-LIKE FOODSTUFF AND METHOD OF OBTAINING IT.**

(57) The foodstuff contains granules consisting of gel formed of egg-white, egg-yolk, a fat component and a food colour in the following ratio in per cent by weight: egg-white 8.0-35, egg-yolk 35-80, fat component 10-20, food colour 0.05-0.15. The method provides for preparation of a viscous emulsion of egg-white, egg-yolk, a fat component and a food colour and its introduction, in drops, in an alimentary vegetable oil heated up to a temperature of 75-85°C. The invention will be applicable in the food industry.

EP 0 571 626 A1

Field of the Invention

The present invention related to the field of manufacturing food products which are analogues of fish product delicacies, in particular, a food product similar to caviar, and to a method for manufacturing same.

Background Art

It is becoming ever more popular to make analogues of food products, especially delicacies, from separate food substances. On the one hand this is due to limited natural resources of food product delicacies, and on the other hand - to the ever rising demand for such products. A stimulating effect on the development of this industry is also due to the high price of the finished product, while production costs are relatively low.

Different methods are known for manufacturing food products imitating sturgeon and salmon caviar. They propose that these products be obtained as granules or capsules made from colloidal solutions, comprising a macro-molecular component which gels when the temperature is changed or when ions of polyvalent metals are introduced therein.

A food product similar to salmon caviar and a method for making it are known (US, 4702921). The product consists of capsules having a casing of calcium alginate filled with separate aqueous and oil phases. The method includes preparing a viscous emulsion consisting of a viscous liquid comprising a viscosity ensuring agent and water, a calcium salt and an oil material; forming capsules when emulsion drops are fed into an aqueous solution of the alginate; separating the said emulsion in each of the capsules into an aqueous phase and an oil phase by heating the capsules at a temperature exceeding 45°C.

The described product is similar in structure to natural salmon caviar, has excellent form-sustaining properties, has an amount of water in its composition close to that of natural caviar, and does not change during a lengthy period of time.

However, such a food product has a large grain, 4-8 mm in diameter, and a rigid, poorly swelling casing because of the high degree of dehydration of the calcium alginate gel forming it. Because of the non-uniformity of the capsules a change in the temperature mode while the product is being stored can cause deformation of the capsules and impairment of the appearance of the product.

The method is distinguished by a plurality of steps and its reproducibility to a marked degree depends on the quality of the calcium alginate and the other components, and also on the mode of the gelatinization process, which affect the organoleptic properties of the obtained food product.

A method is known for obtaining a food product similar to sturgeon caviar (SU, 552738), including preparing a mixture of components by dissolving a food casein in a 0.1 feed alkaline solution at a temperature of 50-60°C and adding a 20-60% aqueous solution of food gelatin into the obtained solution until a colloidal solution is formed. This solution is fed by drops into food vegetable oil heated to a temperature of 40-60°C in the upper layer and cooled to a temperature of 4-7°C in the lower layer. The gelatin-like grains of the product with a diameter of 2-4 mm are tanned with vegetable tanning substances, processed with diluted solutions of alginates or low-etherified pectins, and subjected to dyeing with black food dyes. The processed grains are subjected to culinary treatment by adding thereto a homogeneous mass comprising sodium glutaminate, sodium chloride, ascorbic acid, corn oil and fish oil.

The food product obtained as granules, which keep their strength, closely imitates the properties of natural sturgeon caviar at temperatures above 30°C, i.e. above the temperature at which the gelatine melts.

However, because gelatine is used as the gel-forming component, the granules of such a food product are rigid, resilient and don't adhere very strongly to each other, wherein their insides have a very viscous structure. Furthermore, they are not transparent at all and their amino acidic composition can substantially differ from the composition of the initial protein because of the effect of the alkaline on the latter.

The method is characterized by a complex manufacturing process and does not enable the quality of the product to be checked at intermediate stages.

Disclosure of the Invention

The invention is based on the problem of producing a food product which is similar to caviar and with respect to organoleptic properties close to natural sturgeon caviar, and also of developing a method for obtaining it by selecting the corresponding initial components and conditions for gelling the granules of the designated product, which method would ensure the required quality of the food product and simplification of the manufacturing process.

This problem is solved by proposing a food product, similar to caviar and comprising granules which are a gel formed by egg white, egg yolk, a fat component and a food dye in the following ratio (% by weight):

| egg white | 8.0-35 |
|---|---|
| egg yolk | 35-80 |
| fat component | 10-20 |
| food dye | 0.05-0.15 |

The proposed food product has a high biological value with respect to proteins, fats and vitamins contained therein, since caviar and chicken eggs are the closest natural analogues with respect to the composition of the components therein. The granules are 2-3.5 mm in diameter, are characterized by their transparency due to the homogenity of the gel, and closely adhere to each other. They have the property of keeping their shape, have a delicate and soft composition, a color ranging from amber-black to deep black. The product according to the invention, with respect to composition and complex of organoleptic properties, is as similar as possible to natural sturgeon caviar.

In order to achieve gustatory qualities similar to natural black caviar, it is advisable that the food product contain vegetable oil, fish oil or animal fat as the fat component. It is preferable, in order to improve the organoleptic properties of the food product without use of culinary processing, that the egg yolk and/or fat component contain a flavoring dissolved therein and taken in the amount of 1.0-10 % by weight.

The quality of the food product in accordance with the invention, from the point of view of its maximum approach to natural sturgeon caviar, depends completely on the qualitative and quantitative selection of components forming the granules. They are selected taking the following considerations into account.

When the amount of egg white is less than 8.0 % by weight and that of egg yolk is more than 80 % by weight the grain loses its transparency and stable shape, a macro-nonuniformity of the gel structure of the granules is observed. The taste of the food product reminds one of egg yolk. When the amount of egg white is increased to more than 35 % by weight or the amount of egg white is reduced to less than 35 % by weight the granules of the food product take on a whitish shade, become rigid, their consistency is impaired because of the appearance of "rubberization."

A reduction in the amount of the fat component to less than 10 % by weight substantially worsens the organoleptic properties of the product and makes it dissimilar to any of the types of sturgeon caviar. If the amount of the fat component is increased to more than 20 % by weight the contents of the granules separate into layers and there is no possibility at all for the presence of a gellike structure therein.

The amount of food dye is determined by the approximation of the color of the food product according to the invention to the color of common sturgeon, starred sturgeon or beluga caviar.

The problem is also solved in that a method for obtaining a food product similar to caviar is proposed, including preparing a colloidal solution from a mixture of components, feeding it by drops into a heated food vegetable oil, wherein, according to the invention, egg white, egg yolk, a fat component and food dye are mixed with ratios by weight of 8.0-35:35-80:10-20:0.05-0.15 respectively until a viscous emulsion is produced, this emulsion is fed by drops into food vegetable oil, heated to a temperature of 75-85°C, and granules of the designated product, which compose a gel, are formed.

The proposed method is characterized by a simple manufacturing process, which is easily reproduced and enables the quality of the food product obtained to be checked.

A gellike structure due to denaturation of the egg white is formed in the capsules as a result of the qualitative composition of the emulsion and maintenance of the corresponding temperature of the vegetable oil. It should be noted that this structure has a density which differs throughout the volume of the granule, increasing, as a rule, towards its peripheral part.

The temperature interval, within which the formation of granules in the vegetable oil takes place, is determined by the quality required of them to be an analogue of natural caviar. At temperatures exceeding 85°C the granules acquire a "rubber-like" consistency and a white-like shade of color. If the temperature is lowered to below 75°C the emulsion does not form thermotropic gels during a reasonable period of time, and this does not make it possible for mechanically strong granules to be obtained in a practical manufacturing process.

It is recommended that the drops of viscous emulsion be fed through a metallic capillary tube, mounted at some distance from the surface of the vegetable oil. In that case overheating of the emulsion drops and denaturation of the egg white will be prevented throughout the whole volume of the granule. The rate at which the emulsion outflows is determined by that at which the drops are prevented from breaking up on the surface of the vegetable oil.

In order to improve the mixing process it is desirable that the flavoring be added to the egg yolk or fat component before they are added to the egg white and food dye.

Best Method of Carrying Out the Invention

80 kg of egg yolk, 1.0 kg of pollack caviar homogenate and 0.95 kg of sodium chloride are placed in a mixer and intensively mixed until a homogeneous mass is formed. 8.0 kg of egg white, 10 kg of fish oil and 0.05 kg of black food dye are added into the aforementioned mixture while mixing. The homogeneous viscous emulsion formed is removed from the mixer and fed through a metallic capillary tube with a 2 mm diameter, drop by drop into a column with circulating corn oil heated to a temperature of 80°C. The outflow rate of the emulsion from the capillary tube is 10 mm per minute. The granules formed from the drops are removed with the oil from the column and are separated from the oil. The obtained food product comprises spherical granules, 3 mm in diameter, which are a gel formed by the following components (% by weight):

```
egg white                        8.0
egg yolk                         80
fat component (fish oil)         10
black food dye                    0.05


flavoring:
pollack caviar homogenate        1.0
sodium chloride                  0.95
```

The food product is similar with respect to appearance and taste to natural beluga caviar.

Other examples of practicing the proposed invention are herebelow provided.

Example 1.

35 kg of egg yolk, 10 kg of herring roe homogenate are put into a mixer and mixed until a homogeneous mass is formed, after which 35 kg of egg white, 0.15 kg of black food dye and 19.85 kg of deodorized olive oil are added thereto while being mixed. The homogeneous viscous emulsion formed is removed from the mixer and fed to a metallic capillary tube which is 2.5 mm in diameter. The emulsion as drops is fed at a rate of 8 mm per minute into a column with circulating olive oil, heated to a temperature of 85°C. The formed granules, 3 mm in diameter, are removed with the oil and subsequently separated therefrom.

The obtained food product comprises granules, consisting of a gel produced with the components (% by weight):

```
egg white                        35
egg yolk                         35
fat component
(olive oil)                      19.85
food dye                          0.15
flavoring:
herring roe homogenate           10
```

The food product is similar with respect to appearance and taste to natural common sturgeon caviar.

Example 2.

25 kg of egg white, 50 kg of egg yolk are put into a mixer and mixed, foam not being permitted to appear. A homogeneous mixture, consisting of 20 kg of deodorized sunflower-seed oil, 2.4 kg of cod liver oil and 2.5 kg of sodium chloride, is preliminarily prepared and beat into a blend by mixing. At the same time black food dye is fed therein in an amount equal to 0.1 kg. The obtained homogeneous viscous emulsion is removed from the mixer and fed into a metallic capillary tube having a 3 mm diameter. The emulsion as drops is fed at a rate of 10 mm per minute into a column with circulating corn oil, heated to a temperature of 75°C. The formed granules, 3.5 mm in diameter, are removed with the oil from the column and separated therefrom.

The obtained food product comprises granules, consisting of a gel produced with the following components (% by weight):

| | |
|---|---|
| egg white | 25 |
| egg yolk | 50 |
| fat component | |
| (sunflower-seed oil) | 20 |
| black food dye | 0.1 |
| flavoring: | |
| cod liver oil | 2.4 |
| sodium chloride | 2.5 |

The food product is similar with respect to appearance and taste to natural starred sturgeon caviar.

Example 3.

20 kg of egg white, 60 kg of egg yolk, 2.43 kg of sodium chloride and 0.07 kg of black food dye are put into a mixer and thoroughly mixed. A homogeneous mixture of 13.5 kg of melted butter and 4.0 kg of anchovy oil is preliminarily prepared and then added into the mixer during the mixing. The obtained homogeneous viscous emulsion is removed from the mixer and fed into a metallic capillary tube having a 2.5 mm diameter. The emulsion as drops is fed at a rate of 10 mm per minute into a column with circulating olive oil heated to a temperature of 78°C. The formed granules, 3 mm in diameter, are removed with the oil from the column and separated from the oil.

The obtained food product comprises granules consisting of a gel produced with the following components (% by weight):

| | |
|---|---|
| egg white | 20 |
| egg yolk | 60 |
| fat component | |
| (melted butter) | 13.5 |
| black food dye | 0.07 |
| flavoring: | |
| anchovy oil | 4.0 |
| sodium chloride | 2.43 |

The food product is similar with respect to appearance and taste to natural beluga caviar.

Example 4.

8.0 kg of egg white, 79 kg of egg yolk are put into a mixer, mixing being conducted at the same time, are thoroughly mixed, foam not being permitted to appear. 0.1 kg of black food dye is added to the obtained blend and while the mixing is being conducted, 12.9 kg are fed thereto. The obtained homogeneous viscous emulsion is removed from the mixer and fed into a metallic capillary tube having a diameter of 2.5 mm. The emulsion is fed by drops at a rate of 11 mm per minute into a column with circulating olive oil heated to a temperature of 78°C. The granules thus produced, having a diameter of 3 mm, are removed with the oil from the column and separated from the oil. The granules are subjected to culinary treatment by mixing them with 2 kg of salted herring flesh homogenate.

The obtained food product comprises granules consisting of a gel produced with the following components (% by weight):

| egg white | 8.0 |
|---|---|
| egg yolk | 79 |
| fat component (fish oil) | 12.9 |
| black food dye | 0.1 |

The food product is similar with respect to appearance and taste to natural common sturgeon caviar.

Industrial Applicability

The invention will find use in the food industry for the making of food product delicacies with a structure and organoleptic properties, similar to a maximum degree to natural sturgeon caviar.

**Claims**

1. A food product, similar to caviar, comprising granules which are a gel, formed by egg white, egg yolk, a fat component and a food dye (% by weight):

| egg white | 8.0-35 |
|---|---|
| egg yolk | 35-80 |
| fat component | 10-20 |
| food dye | 0.05-0.15. |

2. A food product according to claim 1, characterized in that the fat component is vegetable oil or fish oil or animal fat.

3. A food product according to claims 1, 2, characterized in that the egg yolk and/or fat component include a flavoring dissoluble therein, the amount of the flavoring being equal to 1.0-10 % by weight.

4. A method for manufacturing a food product similar to caviar, including preparing a colloidal solution from a mixture of components, dripping it into a heated food vegetable oil, characterized by mixing egg white, egg yolk, a fat component and a food dye with ratios by weight of 8.0-35:35-80:10-20:0.05-0.15 respectively until a viscous emulsion is produced, feeding drops thereof into the food vegetable oil heated to a temperature of 75-85°C,and forming granules, which are a gel produced with the egg white, egg yolk, fat component and food dye.

5. A method according to claim 4, characterized by using vegetable oil or fish oil or animal fat as the fat component.

6. A method according to claims 4, 5, characterized by adding a flavoring, taken in an amount equal to 1.0-10 % by weight, to the egg yolk and/or fat component prior to preparing the said mixture of components, the flavoring being dissoluble in the egg yolk and/or fat component.

# INTERNATIONAL SEARCH REPORT

| International application No. |
| --- |
| PCT/SU 91/00206 |

**A. CLASSIFICATION OF SUBJECT MATTER**

IPC$^5$ A 23 L 1/328

According to International Patent Classification (IPC) or to both national classification and IPC

**B. FIELDS SEARCHED**

Minimum documentation searched (classification system followed by classification symbols)

IPC.$^5$     A 23 L 1/325, 1/328

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | DE, A1, 3432309 (INSTITUT FüR HOCHSEEFISCHE-REI UND- FISCHVERARBEITUNG), 9 May 1985 (09.05.85), the claims | 5 |
| A | SU, A1, 1423098 (Tbilissky gosudarstvenny universitet), 15 September 1988 (15.09.88), the abstract | 1,4 |
| A | GB, A, 2183985 (O.P. CORPORATION), 17 June 1987 (17.06.87), the claims | 1 |

☐ Further documents are listed in the continuation of Box C.    ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| 29 May 1992 (29.05.92) | 18 June 1992 (18.06.92) |

| Name and mailing address of the ISA<br><br>    ISA/SU | Authorized officer |
| --- | --- |
| Facsimile No. | Telephone No. |

Form PCT/ISA/210 (second sheet) (July 1992)